# EUROPÄISCHE PATENTSCHRIFT

(11) **EP 3 791 070 B1**
(45) Veröffentlichungstag und Bekanntmachung des Hinweises auf die Patenterteilung: **20.04.2022**
(21) Anmeldenummer: 19724384.3
(22) Anmeldetag: 08.05.2019
(51) Int. Cl.: F04C 2/107, B65G 53/32, B65G 53/48, F04C 13/00

(54) **VERFAHREN ZUM BETRIEB EINER FÖRDERVORRICHTUNG UND FÖRDERVORRICHTUNG**
METHOD FOR OPERATING A DELIVERY APPARATUS AND DELIVERY APPARATUS
PROCÉDÉ DE FONCTIONNEMENT D'UN DISPOSITIF DE TRANSPORT ET DISPOSITIF DE TRANSPORT

(30) Priorität: 09.05.2018 DE 102018111120
(43) Veröffentlichungstag der Anmeldung: 17.03.2021
(73) Patentinhaber: J. Wagner GmbH, 88677 Markdorf (DE)
(72) Erfinder: SCHNITTGER, Thorsten, 88699 Frickingen (DE); NGUYEN, Lam Huu, Woodbury, Minnesota 55129 (US); SPINDLER, Florian, 88214 Ravensburg (DE); GÖHRING, Alfred, 88682 Salem (DE)
(74) Vertreter: Otten, Roth, Dobler & Partner mbB Patentanwälte
(86) Internationale Anmeldenummer: PCT/EP2019/061842
(87) Internationale Veröffentlichungsnummer: WO 2019/215242

(56) Entgegenhaltungen:
- EP-A1- 3 041 600
- EP-A2- 2 317 143
- EP-B1- 3 041 600
- DE-A1-102014 112 552
- DE-U1-202009 014 678
- JP-A- 2010 248 978

## Beschreibung

Die Erfindung betrifft ein Verfahren zum Betrieb einer Fördervorrichtung gemäß dem Anspruch 1 sowie eine Fördervorrichtung gemäß dem Anspruch 12.

Aus der DE 20 2009 014 678 U1 ist eine Fördervorrichtung bekannt, welche eine Exzenterschneckenpumpe mit einer Rotor-Stator-Einheit mit einem Auslass, eine Antriebseinheit, eine Regeleinrichtung und einen Förderabschnitt umfasst.

Weiterhin ist aus der EP 3 041 600 A1 eine Vorrichtung zum Ausbringen eines Gemisches mit einer Pumpe, die mit einer Kompressionsstufe und einem Rotor ausgestattet ist, bekannt.

Der Erfindung liegt die Aufgabe zugrunde, ein Verfahren zum Betrieb einer Fördervorrichtung sowie eine Fördervorrichtung zur Durchführung des Verfahrens vorzuschlagen, durch welches die Fördervorrichtung eine hohe Lebensdauer aufweist und insbesondere ein gleichmäßiges Versprühen von fließfähigem Baumaterial gewährleistet ist bzw. welche derart betreibbar ist, dass die Fördervorrichtung eine hohe Lebensdauer aufweist und insbesondere ein gleichmäßiges Versprühen von fließfähigem Baumaterial gewährleistet ist.

Diese Aufgabe wird durch die Merkmale des Anspruchs 1 bzw. des Anspruchs 12 gelöst. In den jeweiligen Unteransprüchen sind vorteilhafte und zweckmäßige Weiterbildungen angegeben.

Das erfindungsgemäße Verfahren zum Betrieb einer Fördervorrichtung zur Förderung eines fließfähigen Baumaterials wie zum Beispiel Farbe oder Putz oder Mörtel, welche eine Regeleinrichtung, eine Exzenterschneckenpumpe mit einer Rotor-Stator-Einheit mit einem Auslass und eine Antriebseinheit umfasst, wobei der Ist-Druck von wenigstens zwei Drucksensoren gemessen wird, wobei der Ist-Druck von dem ersten Drucksensor an dem Auslass der Rotor-Stator-Einheit gemessen wird und wobei der Ist-Druck von dem zweiten Drucksensor an dem dem Auslass nachgeordneten Förderabschnitt gemessen wird, wobei der Förderabschnitt auch eine Abgabevorrichtung umfasst, aus welcher das fließfähige Baumaterial verspritzt wird, wobei es insbesondere vorgesehen ist, dass in der Regeleinrichtung die Ist-Drücke miteinander und mit dem Solldruck verglichen werden, umfasst die Schritte,
- ein Solldruck, welchen die das fließfähige Baumaterial pumpende Exzenterschneckenpumpe an dem Auslass oder an einem dem Auslass nachgeordneten Förderabschnitt erreichen soll, wird an einer Solldruck-Einstelleinrichtung voreingestellt,
- eine Kenngrößere, insbesondere eine mechanische oder elektrische Leistung und/oder eine Drehzahl und/oder ein Drehmoment und/oder eine Stromstärke der Antriebseinheit der Exzenterschneckenpumpe wird gemessen,
- ein Ist-Druck wird in einem Bereich des Auslasses der Rotor-Stator-Einheit und/oder in dem, dem Auslass nachgeordneten Förderabschnitt, welcher insbesondere als Schlauch oder als Rohr ausgebildet ist, durch wenigstens einen Drucksensor gemessen,
- eine Veränderung des von dem wenigsten einen Drucksensor gemessenen Ist-Drucks wird mit wenigstens einer der Kenngrößen derart in Beziehung gesetzt,
   - dass im Fall eines Anstiegs des Ist-Drucks über den Solldruck durch die Regeleinrichtung eine Reduzierung wenigstens einer der Kenngrößen derart bewirkt wird, dass der Solldruck wieder erreicht wird und
   - dass im Fall eines Druckabfalls des Ist-Drucks unter den Solldruck durch die Regeleinrichtung eine Erhöhung wenigstens einer der Kenngrößen derart bewirkt wird, dass der Solldruck wieder erreicht wird.

Ein derartiges Verfahren bringt den Vorteil mit sich, dass insbesondere die Antriebseinheit und die Rotor-Stator-Einheit der Exzenterschneckenpumpe durch eine Vermeidung eines Anstiegs des Ist-Drucks über einen Solldruck vor Überlastungen geschützt sind und Druckschwankungen durch ein Einregeln auf den Solldruck mittels einer Anpassung der Kenngröße bzw. der Kenngrößen und insbesondere von mechanischer oder elektrischer Leistung und/oder Drehzahl und/oder Drehmoment und/oder Stromstärke entgegengewirkt wird, so dass ein Versprühen des fließfähigen Baumaterials mit gleichbleibendem Druck sicher gestellt ist. Hierbei sind die Drehzahl und das Drehmoment oder Stromstärke und eine stabile, gleichbleibende Spannung bzw. die hieraus resultierende Leistung die Kenngrößen bzw. Faktoren, durch welche letztlich der Ist-Druck der Exzenterschneckenpumpe beeinflusst wird und durch welche wahlweise oder kumulativ somit ein entsprechendes Nachregeln erfolgen kann. Der Ist-Druck wird nach der Rotor-Stator-Einheit nämlich am Auslass der Rotor-Stator-Einheit und/oder an einem nachgeordneten Förderabschnitt gemessen, so dass der Ist-Druck immer in einem Bereich gemessen wird, in welchem dieser bereits durch die Leistung der Antriebseinheit beeinflusst ist.

Weiterhin kann hierdurch zum einen ein ordnungsgemäßer Betrieb auch beim Ausfall eines Drucksensors aufrechterhalten werden und zum anderen durch einen Vergleich der von den Drucksensoren gemessenen Ist-Drücke auch auf eine Verstopfung oder ein Leck in dem zwischen den Drucksensoren liegenden Bereich des Förderabschnitts geschlossen werden.

Es ist auch vorgesehen, dass im Betrieb ein Erreichen des Solldrucks derart erfolgt, dass in der Regeleinrichtung auf der Basis eines Unterschieds zwischen dem wenigstens einen gemessen Ist-Druck und dem Solldruck durch einen PI-Regler ein angepasster Kenngrößenwert, insbesondere ein angepasster mechanischen oder elektrischen Leistungswert und/oder ein angepasster Drehzahlwert und/oder eine angepasster Drehmomentwert und/oder ein angepasster Wert der Stromstärke ermittelt wird und eine Leistung und/oder eine Drehzahl und/oder ein Drehmoment des Antriebs der Exzenterschneckenpumpe auf diesen bzw. diese eingestellt wird. Hierdurch ist eine Nachregelung gewährleistetet, durch welche Druckschwankungen weitgehend vermieden sind.

Bei der Verwendung von wenigstens zwei Drucksensoren ist es vorgesehen, dass von der Regeleinrichtung ein Druckunterschied zwischen dem von dem ersten Drucksensor an dem Auslass gemessenen Ist-Druck und dem von dem zweiten Drucksensor an dem Förderabschnitt gemessenen Ist-Druck ermittelt wird und dass ein optisches und/oder akustisches Warnsignal aktiviert wird und/oder die Leistung der Antriebseinheit reduziert wird und/oder ein Antrieb der Antriebseinheit der Rotor-Stator-Einheit der Exzenterschneckenpumpe abgeschaltet wird, wenn der von dem zweiten Drucksensor gemessene Ist-Druck erheblich, nämlich insbesondere um mehr als 30% und vorzugsweise mehr als 50% von dem von dem ersten Drucksensor gemessenen Ist-Druck abweicht. Hierdurch lässt sich eine Verstopfung bzw. ein Leck in dem zwischen den Drucksensoren liegenden Förderabschnitt detektieren und somit eine Überlastung der Exzenterschneckenpumpe bzw. ein Ausfördern des fließfähigen Baumaterials an ungewünschter Stelle vermeiden.

Weiterhin ist es vorgesehen, dass die Exzenterschneckenpumpe entweder mit einer ersten Rotor-Stator-Einheit zur Förderung von Farbe oder dass die Exzenterschneckenpumpe mit einer zweiten Rotor-Stator-Einheit zur Förderung von Mörtel oder Putz betrieben wird und dass die Regeleinrichtung abhängig von der in Betrieb befindlichen Rotor-Stator-Einheit entweder mit einem ersten, auf die erste Rotor-Stator-Einheit und Solldrücke von bis zu 180 bar angepassten Regelprogramm betrieben wird oder mit einem zweiten, auf die zweite Rotor-Stator-Einheit und Solldrücke von bis zu 60 bar angepassten Regelprogramm betrieben wird. Im zweiten Regelprogramm kann auch ein Arbeitsdruck von 10 bis 20 bar und ein Maximaldruck von 40 bar vorgesehen sein. Entsprechend kann mit der Exzenterschneckenpumpe allein durch einen rasch durchführbaren Wechsel der Rotor-Stator-Einheit und einem entsprechenden Wechsel des Regelprogramms sowohl Farbe als auch Mörtel bzw. Putz bei gleichbleibendem Austrag des fließfähigen Baumaterials versprüht werden.

Weiterhin ist es auch vorgesehen, dass in Schaltstellungen, in welchen eine Betriebsart-Einstelleinrichtung auf "Befüllen und Reinigen der Exzenterschneckenpumpe" steht, von der Regeleinrichtung von dem wenigstens einen Drucksensor erfasste Druckänderungen unbeachtet gelassen werden und die Antriebseinheit in diesen Schaltstellungen der Betriebsart-Einstelleinrichtung mit einer konstanten Drehzahl oder mit einem konstanten Drehmoment oder mit einer konstanten Leistung betrieben wird, welche allenfalls 50% einer Drehzahl oder eines Drehmoments oder einer Leistung beträgt, mit welcher die Antriebseinheit in einem "Normalbetrieb" betrieben wird. Hierdurch ist vermieden, dass beim Befüllen bzw. Reinigen sich sprunghaft verändernde Messwerte des wenigstens einen Drucksensors das Befüllen oder das Reinigen der Exzenterschneckenpumpe durch eine Nachregeln der Antriebseinheit ungewünscht beeinflussen.

Alternativ ist es auch vorgesehen, dass in Schaltstellungen in welchen eine Betriebsart-Einstelleinrichtung auf "Befüllen und Reinigen der Exzenterschneckenpumpe" steht, von der Regeleinrichtung von dem wenigstens einen Drucksensor erfasste Druckänderungen bis zu einem Grenzwert von insbesondere etwa 25 bar unbeachtet gelassen werden und die Antriebseinheit in diesen Schaltstellungen der Betriebsart-Einstelleinrichtung mit einer konstanten Drehzahl oder einer konstanten Leistung betrieben wird, welche allenfalls 50% einer Drehzahl bzw. Leistung beträgt, mit welcher die Antriebseinheit in einem Normalbetrieb arbeitet und die Antriebseinheit in diesen Schaltstellungen der Betriebsart-Einstelleinrichtung abgeschaltet wird, wenn an dem Drucksensor oder an einem der Drucksensoren der Grenzwert gemessen wird. Hierdurch ist vermieden, dass beim Befüllen bzw. Reinigen sich sprunghaft verändernde Messwerte des wenigstens einen Drucksensors das Befüllen oder das Reinigen der Exzenterschneckenpumpe durch eine Nachregeln der Antriebseinheit ungewünscht beeinflussen. Gleichzeitig ist durch einen Grenzwert für die Druckänderung aber sicher gestellt, dass extreme Druckschwankungen zum Abschalten der Antriebseinheit führen, so dass für den Anwender der Komfort besteht, in Ruhe die Ursache für die extreme Druckschwankung ergründen und beheben zu können.

Es ist auch vorgesehen, dass in einer Schaltstellung, in welcher eine Betriebsart-Einstelleinrichtung auf "Rückwärtsfördern von Baumaterial" steht, von der Regeleinrichtung von dem wenigstens einen Drucksensor erfasste Druckänderungen unbeachtet gelassen werden und dass die Antriebseinheit in dieser Schaltstellung der Betriebsart-Einstelleinrichtung in umgekehrter Drehrichtung mit einer konstanten Drehzahl oder einem konstanten Drehmoment betrieben wird, welche bzw. welches gegenüber einem Normalbetrieb allenfalls 50% einer Drehzahl bzw. eines Drehmoments beträgt, mit welcher bzw. mit welchem der Antrieb in einem Normalbetrieb arbeitet. Hierdurch ist vermieden, dass beim Rückwärtsfördern sich sprunghaft verändernde Messwerte des wenigstens einen Drucksensors das Rückwärtsfördern der Exzenterschneckenpumpe durch eine Nachregeln der Antriebseinheit ungewünscht beeinflussen.

Alternativ ist es auch vorgesehen, dass in einer Schaltstellung, in welcher eine Betriebsart-Einstelleinrichtung auf "Rückwärtsfördern von Baumaterial" steht, von der Regeleinrichtung von dem wenigstens einen Drucksensor erfasste Druckänderungen bis zu einem Grenzwert von insbesondere etwa 25 bar unbeachtet gelassen werden und dass die Antriebseinheit in dieser Schaltstellung der Betriebsart-Einstelleinrichtung in einer umgekehrten Drehrichtung bei einem unter dem Grenzwert liegenden Ist-Druck mit einer konstanten Drehzahl oder einem konstanten Drehmoment betrieben wird, welche bzw. welches allenfalls 50% einer Drehzahl beträgt, mit welcher die Antriebseinheit in einem Normalbetrieb arbeitet und der Antrieb in dieser Schaltstellung der Betriebsart-Einstelleinrichtung bei einem den Grenzwert erreichenden Ist-Druck abgeschaltet wird. Hierdurch ist vermieden, dass beim Rückwärtsfördern sich sprunghaft verändernde Messwerte des wenigstens einen Drucksensors das Rückwärtsfördern der Exzenterschneckenpumpe durch eine Nachregeln der Antriebseinheit ungewünscht beeinflussen. Gleichzeitig ist durch einen Grenzwert für die Druckänderung aber sicher gestellt, dass extreme Druckschwankungen zum Abschalten der Antriebseinheit führen, so dass für den Anwender der Komfort besteht, in Ruhe die Ursache für die extreme Druckschwankung ergründen und beheben zu können.

Weiterhin sieht das Verfahren vor, dass der von der Exzenterschneckenpumpe zu erzeugende Solldruck mittels einer an der Fördervorrichtung angeordneten, manuell betätigbaren Solldruck-Einstelleinrichtung eingestellt wird und/oder dass der von der Exzenterschneckenpumpe zu erzeugende Solldruck mittels einer auf einem elektronischen Gerät ausführbaren Anwendung eingestellt wird, wobei eine Datenverkehr zwischen der Regeleinrichtung und dem elektronischen Gerät drahtlos durch eine direkte Verbindung oder drahtlos über ein Mobilfunknetzwerk ausgeführt wird. Hierdurch sind alternativ oder kumulativ die Vorteile einer Vor-Ort-Bedienung und einer Fernbedienung gegeben. Durch eine Bedienung über das elektronische Gerät ist es einem Baustellenleiter einfach möglich, auch mehrere Fördervorrichtungen zu überwachen bzw. in kurzer Zeit von einem Ort aus einzustellen.

Schließlich sieht das Verfahren vor, dass die Fördervorrichtung in einem Normalbetrieb derart betrieben wird, dass die Antriebseinheit bei einem von dem ersten Drucksensoren ermittelten, plötzlichen Abfall des Ist-Drucks auf insbesondere unter 5 bar abgeschaltet wird und/oder von der Regeleinrichtung ein akustisches oder optisches Störungssignal aktiviert wird und/oder von der Regeleinrichtung ein Störsignal an ein elektronisches Gerät übermittelt wird, sofern der Abfall des Ist-Drucks festgestellt wird, ohne dass ein Leistungsabfall der Antriebseinheit festgestellt wird. Hierdurch kann ein drohender Trockenlauf der Exzenterschneckenpumpe der Fördereinrichtung erkannt werden, so dass vor einem Heißlaufen der Exzenterschneckenpumpe abgeschaltet werden kann oder andere geeignete Maßnahmen ergriffen werden können.

Die erfindungsgemäße Fördervorrichtung zur Durchführung eines Verfahrens nach einem der Ansprüche 1 bis 10 umfasst eine Exzenterschneckenpumpe mit einer Rotor-Stator-Einheit mit einem Auslass, eine Antriebseinheit, eine Regeleinrichtung und einen Förderabschnitt, wobei die Fördervorrichtung wenigstens einen Drucksensor und eine Kenngrößen-Erfassungseinrichtung umfasst. Durch das Vorhandensein der Kenngrößen-Erfassungseinrichtung ist der Regeleinrichtung auch ein Betriebszustand der Antriebseinheit bekannt und ist es der Regeleinrichtung damit möglich, eine Stellgröße an einem IST-Zustand der Antriebseinrichtung zu orientieren.

Weiterhin ist es bei der Fördervorrichtung vorgesehen, dass die Kenngrößen-Erfassungseinrichtung einen Drehzahlsensor umfasst, mittels welchem eine Drehzahl der Förderschnecke der Exzenterschneckenpumpe oder eines Antriebs der Antriebseinheit der Fördervorrichtung erfassbar ist, und/oder dass die Kenngrößen-Erfassungseinrichtung einen Drehmomentsensor umfasst, mittels welchem ein Drehmoment der Förderschnecke der Exzenterschneckenpumpe oder eines Antriebs der Antriebseinheit der Fördervorrichtung erfassbar ist, und/oder dass die Kenngrößen-Erfassungseinrichtung einen Leistungssensor, welcher insbesondere Spannung und Stromstärke erfasst, welche der Antrieb der Antriebseinheit aufnimmt, umfasst, mittels welchem eine Leistung der Förderschnecke der Exzenterschneckenpumpe oder eines Antriebs der Antriebseinheit der Fördervorrichtung erfassbar ist. Die Drehzahl, das Drehmoment und die Leistung sind alternativ oder kumulativ geeignet, der Regeleinrichtung einen Betriebszustand der Antriebseinheit zu vermitteln.

Es ist auch vorgesehen, dass der Drucksensor im Bereich des Auslasses der Rotor-Stator-Einheit oder dass der Drucksensor nach dem Auslass der Rotor-Stator-Einheit der Exzenterschneckenpumpe in einem Bereich des Förderabschnitts der Fördervorrichtung angeordnet ist. Hiermit wird der Ist-Druck immer in einem Bereich gemessen, in welchem dieser bereits durch die Leistung der Antriebseinheit beeinflusst ist.

Weiterhin ist es vorgesehen, dass der Drucksensor in einem Bereich des Auslasses der Rotor-Stator-Einheit angeordnet ist und dass ein weiterer Drucksensor nach dem Auslass der Rotor-Stator-Einheit der Exzenterschneckenpumpe in einem Bereich des Förderabschnitts der Fördervorrichtung angeordnet ist. Hierdurch kann zum einen ein ordnungsgemäßer Betrieb auch beim Ausfall eines Drucksensors aufrechterhalten werden und hierdurch kann zum andren durch einen Vergleich der von den Drucksensoren gemessenen Ist-Drücke auch auf eine Verstopfung oder ein Leck des zwischen den Drucksensoren liegenden Bereichs des Förderabschnitts geschlossen werden.

Schließlich ist es vorgesehen, dass die Fördervorrichtung eine Solldruck-Einstelleinrichtung zur manuellen Einstellung eines Solldrucks umfasst oder dass der von der Exzenterschneckenpumpe zu erzeugende Solldruck mittels einer auf einem elektronischen Gerät ausführbaren Anwendung einstellbar ist, wobei die Regeleinrichtung und das elektronische Gerät für einen Datenverkehr drahtlos durch eine direkte Verbindung oder drahtlos über ein Mobilfunknetzwerk verbunden sind. Hierdurch sind alternativ oder kumulativ die Vorteile einer Vor-Ort-Bedienung und einer Fernbedienung gegeben. Durch eine Bedienung über das elektronische Gerät ist es einem Baustellenleiter einfach möglich, auch mehrere Fördervorrichtungen zu überwachen bzw. in kurzer Zeit von einem Ort aus einzustellen.

Im Sinne der Erfindung ist unter einem Solldruck auch ein Solldruckbereich zu verstehen, welcher sich von einem Druckwert, welcher 10% und insbesondere 5% unterhalb des Solldrucks liegt, bis zu einem Druckwert, welcher 10% und insbesondere 5% oberhalb des Solldrucks liegt, erstreckt.

Weitere Einzelheiten der Erfindung werden in der Zeichnung anhand von schematisch dargestellten Ausführungsbeispielen beschrieben.

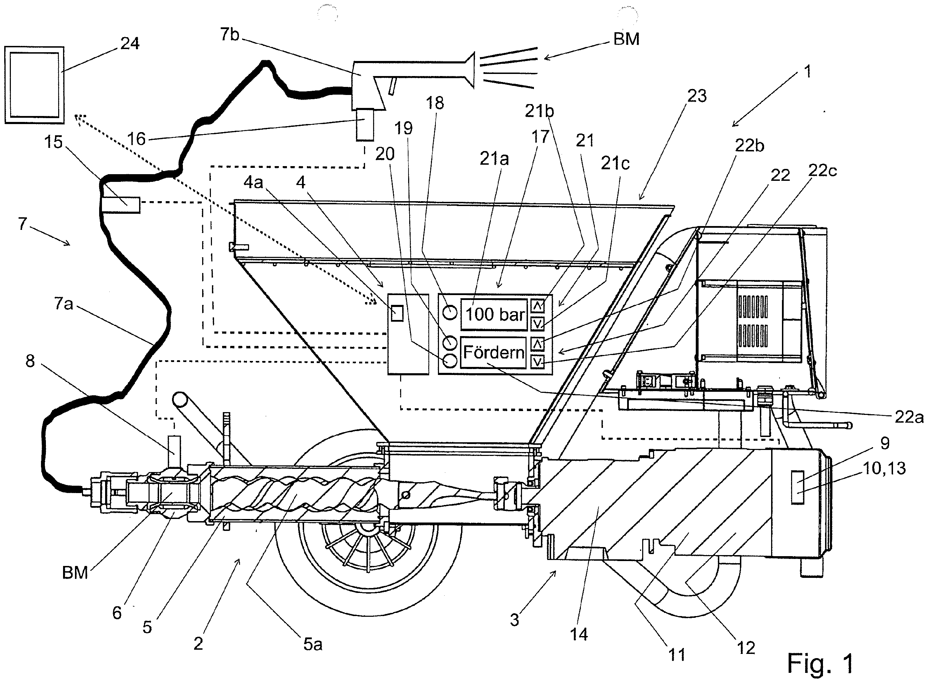

Hierbei zeigt die Figur 1 eine teilweise geschnittene Seitenansicht einer erfindungsgemäßen Fördervorrichtung.

In der Figur 1 ist eine erfindungsgemäße Fördervorrichtung 1 in teilweise geschnittener Seitenansicht dargestellt. Zur grundsätzlichen Funktionsweise der Fördervorrichtung 1 wird auch auf die bereits oben genannte DE 20 2009 014 678 U1 der Anmelderin verwiesen.

Die Fördervorrichtung 1 umfasst eine Exzenterschneckenpumpe 2, eine Antriebseinheit 3, eine Regeleinrichtung 4. Die Exzenterschneckenpumpe 2 umfasst eine Rotor-Stator-Einheit 5 mit einer Förderschnecke 5a und einem Auslass 6. Weiterhin umfasst die Fördervorrichtung 1 einen Förderabschnitt 7, welcher an den Auslasse 6 der Rotor-Stator-Einheit 5 angeschlossen ist. Der Förderabschnitt 7 umfasst einen Schlauch 7a und eine Abgabevorrichtung 7b, mittels welcher der Ausstoß von flüssigem Baumaterial BM aktivierbar und deaktivierbar und vorzugsweise auch dosierbar ist.

Weiterhin umfasst die Fördervorrichtung 1 einen ersten Drucksensor 8 und eine Kenngrößen-Erfassungseinrichtung 9. Die Kenngrößen-Erfassungseinrichtung 9 umfasst einen Drehzahlsensor 10, mittels welchem eine Drehzahl eines Antriebs 11 der Antriebseinheit 3 der Fördervorrichtung 1 erfassbar ist. Hierbei ist der Antrieb 11 als BLDC-Elektromotor 12 ausgebildet und der Drehzahlsensor 10 umfasst wenigstens einen direkt an dem BLDC-Elektromotor 12 verbauten HALL-Sensor 13. Die Antriebseinheit 3 umfasst neben dem Antrieb 11 auch ein Getriebe 14, welches zwischen dem Antrieb 11 und der Exzenterschneckenpumpe 2 verbaut ist. Gemäß einer nicht dargestellten Ausführungsvariante ist es auch vorgesehen, dass der Antrieb einen Asynchronmotor mit Frequenzumrichter oder einen anderen geeigneten Motor umfasst.

Gemäß einer nicht dargestellten Ausführungsvarianten ist es auch vorgesehen, dass der Drehzahlsensor derart angeordnet ist, dass mit dem Drehzahlsensor eine Drehzahl der Förderschnecke der Exzenterschneckenpumpe erfass wird.

Gemäß einer nicht dargestellten Ausführungsvarianten ist es alternativ oder zusätzlich zu der Erfassung einer Drehzahl auch vorgesehen, dass die Fördervorrichtung als Kenngrößen-Erfassungseinrichtung ein Drehmomentsensor umfasst, mittels welchem ein Drehmoment der Förderschnecke der Exzenterschneckenpumpe oder eines Antriebs der Antriebseinheit der Fördervorrichtung erfassbar ist.

Gemäß einer nicht dargestellten Ausführungsvarianten ist es alternativ oder zusätzlich zu der Erfassung einer Drehzahl mit einem Drehzahlsensor und/oder zu der Erfassung eines Drehmoments mit einem Drehmomentsensor auch vorgesehen, dass die Fördervorrichtung als Kenngrößen-Erfassungseinrichtung einen Leistungssensor umfasst, mittels welchem eine Leistung der Förderschnecke der Exzenterschneckenpumpe oder eines Antriebs der Antriebseinheit der Fördervorrichtung erfassbar ist.

In der Figur 1 ist neben einer ersten Ausführungsvariante, in welcher die Fördervorrichtung 1 nur einen, nämlich den ersten Drucksensor 8 umfasst, auch eine zweite bis sechste Ausführungsvariante gezeigt.

Hierbei umfasst die Fördervorrichtung 1 in der zweiten Ausführungsvariante neben dem ersten Drucksensor 8 einen zweiten Drucksensor 15, welcher etwa in der Mitte des Schlauchs 7a angeordnet ist und einen IST-Druck in dem Schlauch 7a erfasst.

Hierbei umfasst die Fördervorrichtung 1 in der dritten Ausführungsvariante neben dem ersten Drucksensor 8 einen zweiten Drucksensor 16, welcher an der Abgabevorrichtung angeschlossen ist und dort den IST-Druck in einem von dem fließfähigen Baumaterial durchströmten Abschnitt erfasst.

Hierbei umfasst die Fördervorrichtung 1 in der vierten Ausführungsvariante als einzigen Drucksensor den Drucksensor 15.

Hierbei umfasst die Fördervorrichtung 1 in der fünften Ausführungsvariante als einzigen Drucksensor den Drucksensor 16.

Hierbei umfasst die Fördervorrichtung 1 in der sechsten Ausführungsvariante drei Drucksensoren, nämlich die Drucksensoren 8, 15 und 16.

In sämtlichen Ausführungsvarianten ist der jeweils vorhandene Drucksensor bzw. sind die jeweils vorhandenen Drucksensoren drahtlos oder drahtgebunden an die Regeleinrichtung 4 angeschlossen, welche zur Regelung des Antriebs einen PI-Regler 4a umfasst.

Die nachfolgende Beschreibung ist für alle Ausführungsvarianten zutreffend, sofern nicht ausdrücklich abweichende Ausführungen zu einzelnen Ausführungsvarianten gemacht werden. Die Fördervorrichtung 1 umfasst auch eine Bedieneinrichtung 17, welche an die Regeleinrichtung 9 angeschlossen ist. Die Bedieneinrichtung 17 umfasst einen Notaus-Knopf 18, einen Start-Knopf 19 und einen Stopp-Knopf 20. Weiterhin umfasst die Bedieneinrichtung 17 eine Solldruck-Einstelleinrichtung 21 und eine Betriebsart-Einstelleinrichtung 22. Die Solldruck-Einstelleinrichtung 21 umfasst ein Display 21a, eine erste Wahltaste 21b und eine zweite Wahltaste 21c. Durch Drücken der Wahltasten 21b bzw. 21c kann der gewünschte Solldruck eingestellt werden. Die Betriebsart-Einstelleinrichtung 22 umfasst ein Display 22a, eine erste Wahltaste 22b und eine zweite Wahltaste 22c. Durch Drücken der Wahltasten 22b bzw. 22c kann die gewünschte Betriebsart eingestellt werden. Hierbei sind die Betriebsarten "Fördern", "Befüllen und Reinigen der Exzenterschenkenpumpe", und "Rückwärtsfördern von Baumaterial" vorgesehen. Die Betriebsart "Fördern" wird auch als "Arbeitsbetrieb" oder "Normalbetrieb" bezeichnet. Auf der Basis der jeweils eingestellten Parameter erfolgt dann durch Drücken des Start-Knopfes 19 z.B. ein Fördern des Baumaterials BM mit eine Solldruckvorgabe von 100 bar. Die Fördervorrichtung 1 umfasst einen Füllbehälter 23, über welchen der Exzenterschneckenpumpe 2 das Baumaterial BM zugeführt wird. Bei einer Solldruckvorgabe von 100 bar ist die Fördervorrichtung 1 - wie dargestellt - mit der Rotor-Stator-Einheit 5 ausgestattet, welche für das Fördern von als Mörtel oder Putz ausgebildetem Baumaterial geeignet ist. Für das Fördern von Mörtel oder Putz sind Solldruckvorgaben von bis zu 60 bar vorgesehen. Sofern als Baumaterial Farbe gefördert werden soll, wird die Rotor-Stator-Einheit 5 gegen eine insbesondere hinsichtlich Windungszahl und Durchmesser abweichend ausgelegte, nicht dargestellte Rotor-Stator-Einheit ausgetauscht. Hier sind dann Solldruckvorgaben von bis zu 180 bar vorgesehen.

Für das Fördern von Baumaterial mit der Fördervorrichtung ist es vorgesehen,
- dass - wie bereits oben beschrieben - ein Solldruck, welchen die das fließfähige Baumaterial BM pumpende Exzenterschneckenpumpe 2 an ihrem Auslass 6 oder an einem dem Auslass 6 nachgeordneten Förderabschnitt 7 erreichen soll, an der Solldruck-Einstelleinrichtung 21 voreingestellt wird,
- dass eine Kenngröße, nämlich eine Drehzahl des Antriebs 11 der Antriebseinheit 3 mittels eines Drehzahlsensors 10 gemessen wird, wobei es ergänzend oder alternativ auch vorgesehen sein kann, dass eine mechanische oder elektrische Leistung und/oder ein Drehmoment und/oder eine Stromstärke eines Stromes, welchen der Antrieb aufnimmt, gemessen wird,
- dass ein Ist-Druck in einem Bereich des Auslasses 6 der Rotor-Stator-Einheit 5 durch den Drucksensor 8 gemessen wird,
- dass eine Veränderung des von dem Drucksensor 8 gemessenen Ist-Drucks mit der von dem Drehzahlsensor 10 erfassten Kenngröße "Drehzahl" und/oder wenigstens einer anderen Kenngröße derart in Beziehung gesetzt wird,
- dass im Fall eines Anstiegs des von dem Drucksensor 8 gemessenen Ist-Drucks über den voreingestellten Solldruck durch die Regeleinrichtung 4 eine Reduzierung der Kenngröße "Drehzahl des Antriebs" und/oder wenigstens einer anderen Kenngröße derart bewirkt wird, dass der Solldruck wieder erreicht wird und
- dass im Fall eines Druckabfalls des von dem Drucksensor 8 gemessenen Ist-Drucks unter den voreingestellten Solldruck durch die Regeleinrichtung 4 eine Erhöhung der Kenngröße "Drehzahl des Antriebs" und/oder wenigstens einer anderen Kenngröße derart bewirkt wird, dass der Solldruck wieder erreicht wird.
Abhängig von den Möglichkeiten, mit welchen die Regeleinrichtung 4 auf den Antrieb 11 einwirken kann, ist es alternativ oder kumulativ auch vorgesehen, auf die Kenngröße Drehmoment des Antriebs und/oder auf die Kenngröße Leistung des Antriebs einzuwirken, wobei die Kenngrößen zueinander selbstverständlich in einer Beziehung stehen.

Sofern mehr als ein Drucksensor nämlich die Drucksensoren 8 und 15 oder 8 und 16 oder 15 und 16 zur Überwachung des vorgegebenen Solldrucks zum Einsatz kommen, ist in der Regeleinrichtung 4 für die Sensoren 15 bzw. 16 ein gemessener oder errechneter Druckabfall berücksichtigt, welcher durch den Abstand der Sensoren 15 bzw. 16 von dem Auslass 6 und die Eigenschaften des Schlauches 7a wie z.B. Durchmesser und Elastizität bestimmt wird.

Bei einer Ausführungsvariante der Fördervorrichtung 1 mit wenigstens zwei Drucksensoren z.B. 8 und 15 oder 8 und 16 oder 15 und 16 oder 8 und 15 und 16 ist es vorgesehen, dass von der Regeleinrichtung ein Druckunterschied zwischen dem von dem ersten Drucksensor gemessenen Ist-Druck und dem von dem weiteren Drucksensor gemessenen Ist-Druck ermittelt wird und dass ein optisches und/oder akustisches Warnsignal aktiviert wird und/oder die Leistung der Antriebseinheit reduziert wird und/oder ein Antrieb der Antriebseinheit der Rotor-Stator-Einheit der Exzenterschneckenpumpe abgeschaltet wird, wenn der von dem zweiten Drucksensor gemessene Ist-Druck erheblich von dem von dem ersten Drucksensor gemessenen Ist-Druck abweicht.

Eine Drehzahl der Förderschnecke 5a der Fördervorrichtung 1 beträgt im Leerlauf maximal 300 U/min und vorzugsweise maximal 270 U/min. Unter Last also beim Fördern von fließfähigem Baumaterial bzw. im sogenannten "Normalbetrieb" beträgt die Drehzahl der Förderschnecke 5a der Fördervorrichtung 1 maximal 300 U/min und vorzugsweise maximal 260 U/min. In den Betriebsarten "Befüllen und Reinigen der Exzenterschenkenpumpe" und "Rückwärtsfördern von Baumaterial" ist die Drehzahl auf maximal 100 U/min und vorzugsweise maximal 80 U/min begrenzt.

Alternativ oder kumulativ zu der Bedieneinrichtung 17 ist es vorgesehen, dass die Fördervorrichtung 1 ein elektronisches Gerät 24 umfasst, auf welchem eine Anwendung bzw. App ausgeführt wird, mittels welcher die Fördereinrichtung 1 in vergleichbarer Weise wie mit der Bedieneinrichtung 17 bedient werden kann. Hierzu ist das elektronische Gerät 24, welches beispielsweis als Mobiltelefon oder als Tablet ausgebildet ist, drahtlos mit der Regeleinrichtung 4 verbunden. Hierbei ist es alternativ oder kumulativ vorgesehen, dass eine direkte drahtlose Funkverbindung etabliert ist oder dass das elektronische Gerät 24 und die Regeleinrichtung 4 über ein Mobilfunknetz miteinander verbunden sind. Sowohl das elektronische Gerät 24 als auch die Regeleinrichtung 4 umfassen jeweils ein entsprechendes Funkmodul bzw. entsprechende Funkmodule.

Die erwähnte Anwendung ist hierbei als mobile Applikation bzw. App-Lösung ausgebildet, welche unabhängig vom Betriebssystem zur Nutzung auf Mobiltelefonen vorgesehen ist. Hierbei ist die erwähnte drahtlose Funkverbindung zu der Regeleinrichtung insbesondere als WIFI-Funkverbindung oder als Bluetooth-Funkverbindung vorgesehen kann aber auch als Mobilfunkverbindung aufgebaut werden. Bei der kann die Regeleinrichtung hierzu mit einem Mobilfunkmodul ausgestattet werden. Die mobile App-Lösung ist vorzugsweise auch so programmiert, dass diese zur Überwachung und Steuerung der selben Fördereinrichtung auf mehreren Mobiltelefonen installierbar ist, wobei dann vorzugsweise eines der Mobiltelefone als Mastergerät definiert ist, mittels welchem Steuerbefehle und/oder Eingaben der anderen Mobiltelefone übersteuert werden können. Es ist insbesondere vorgesehen, dass mittels der auf dem Mobiltelefon installierten App-Lösung der Solldruck eingestellt werden kann. Dies kann insbesondere dadurch erleichtert sein, dass mittels der App-Lösung durch die Auswahl einer bestimmten Pumpengarnitur in Folge hinterlegter Daten gleich das zugehörige Regelprogramm und damit auch der passende Solldruck ausgewählt werden. Zur Verbesserung der Regelergebnisse ist es auch vorgesehen, dass als weitere Maschinenparamater neben der Bestimmung der Pumpengarnitur auch eine Bestimmung der Schlauchgarnitur erfolgt, welche insbesondere durch Schlauchlänge und Schlauchdurchmesser definiert ist. Sofern durch die gewählte Schlauchgarnitur an der Fördereinrichtung dann zwei oder mehr Drucksensoren verbaut sind, ist es vorgesehen, dass auch ein durch die Parameter des Schlauchs bestimmter Druckabfall zwischen den Sensoren von der App-Lösung berechnet wird oder dessen Wert in der App-Lösung hinterlegt ist. Weiterhin ist es vorgesehen, dass zur Optimierung des Betriebs der Fördereinrichtung und deren Exzenterschneckenpumpe Kenngrößen des Baumaterials wie Typ (z.B. Mörtel, Farbe, Putz) und/oder Korngröße eingegeben werden. Hierdurch kann mittels der App-Lösung dann das Regelprogramm optimiert werden. Weiterhin ist es vorgesehen, dass die Anwender mittels der App-Lösung über das Mobiltelefon bei drohendem Trockenlauf der Fördereinrichtung alarmiert werden. Schließlich ist es vorgesehen, dass die Anwender mittels der App-Lösung Betriebsstundenzahl, Service-Intervalle, Störungen und weitere Informationen zu jeder mit der App-Lösung registrierten Fördereinrichtung abgerufen können.

### Bezugszeichenliste:

- 1: Fördervorrichtung
- 2: Exzenterschneckenpumpe
- 3: Antriebseinheit
- 4: Regeleinrichtung
- 4a: PI-Regler
- 5: Rotor-Stator-Einheit von 2
- 5a: Förderschnecke von 5
- 6: Auslass von 5
- 7: Förderabschnitt
- 7a: Schlauch von 7
- 7b: Abgabevorrichtung von 7
- 8: Drucksensor
- 9: Kenngrößen-Erfassungseinrichtung
- 10: Drehzahlsensor
- 11: Antrieb von 3
- 12: BLDC-Elektromotor
- 13: HALL-Sensor als 10
- 14: Getriebe von 3
- 15: zweiter Drucksensor
- 16: dritter Drucksensor
- 17: Bedieneinrichtung
- 18: Notaus-Knopf
- 19: Start-Knopf
- 20: Stopp-Knopf
- 21: Solldruck-Einstelleinrichtung
- 21a: Display
- 21b, 21c: Wahltaste
- 22: Betriebsart-Einstelleinrichtung
- 22a: Display
- 22b, 22c: Wahltaste
- 23: Füllbehälter
- 24: elektronisches Gerät

- BM: Baumaterial

## Patentansprüche

1. **Verfahren zum Betrieb** einer Fördervorrichtung (1) zur Förderung eines fließfähigen Baumaterials (BM) wie zum Beispiel Farbe oder Putz oder Mörtel, wobei die Fördervorrichtung (1) eine Regeleinrichtung (4), eine Exzenterschneckenpumpe (2) mit einer Rotor-Stator-Einheit (5) mit einem Auslass (6) und eine Antriebseinheit (3) umfasst, wobei der Ist-Druck von wenigstens zwei Drucksensoren (8, 15, 16) gemessen wird, wobei der Ist-Druck von dem ersten Drucksensor (8) an dem Auslass gemessen wird und wobei der Ist-Druck von dem zweiten Drucksensor (15, 16) an dem, dem Auslass nachgeordneten Förderabschnitt (7), gemessen wird, wobei der Förderabschnitt (7) auch eine Abgabevorrichtung (7b) umfasst, aus welcher das fließfähige Baumaterial (BM) verspritzt wird, umfassend die Schritte,
- dass ein Solldruck, welchen die das fließfähige Baumaterial (BM) pumpende Exzenterschneckenpumpe (2) an dem Auslass (6) oder an einem dem Auslass (6) nachgeordneten Förderabschnitt (7) erreichen soll, an einer Solldruck-Einstelleinrichtung (21)voreingestellt wird,
- dass eine Kenngröße, insbesondere eine mechanische oder elektrische Leistung und/oder eine Drehzahl und/oder ein Drehmoment und/oder eine Stromstärke der Antriebseinheit (3) der Exzenterschneckenpumpe (2) gemessen wird,
- dass ein Ist-Druck in einem Bereich des Auslasses (6) der Rotor-Stator-Einheit (5) und/oder in dem dem Auslass (6) nachgeordneten Förderabschnitt (7) durch wenigstens einen Drucksensor (8, 15, 16) gemessen wird,
- dass eine Veränderung des von dem wenigsten einen Drucksensor (8, 15, 16) gemessenen Ist-Drucks mit wenigstens einer der Kenngrößen derart in Beziehung gesetzt wird,
- dass im Fall eines Anstiegs des Ist-Drucks über den Solldruck durch die Regeleinrichtung (4) eine Reduzierung wenigstens einer der Kenngrößen derart bewirkt wird, dass der Solldruck wieder erreicht wird und
- dass im Fall eines Druckabfalls des Ist-Drucks unter den Solldruck durch die Regeleinrichtung (4) eine Erhöhung wenigstens einer der Kenngrößen derart bewirkt wird, dass der Solldruck wieder erreicht wird.

2. Verfahren nach Anspruch 1, **dadurch gekennzeichnet, dass** im Betrieb ein Erreichen des Solldrucks derart erfolgt, dass in der Regeleinrichtung (4) auf der Basis eines Unterschieds zwischen dem wenigstens einen gemessen Ist-Druck und dem Solldruck durch einen PI-Regler (4a) ein angepasster Kenngrößenwert, insbesondere ein angepasster mechanischer oder elektrischer Leistungswert und/oder ein angepasster Drehzahlwert und/oder eine angepasster Drehmomentwert und/oder ein angepasster Wert der Stromstärke ermittelt wird und eine Leistung und/oder eine Drehzahl und/oder ein Drehmoment des Antriebs (3) der Exzenterschneckenpumpe auf diesen bzw. diese eingestellt wird.

3. Verfahren nach Anspruch 1, **dadurch gekennzeichnet,**
- **dass** von der Regeleinrichtung (4) ein Druckunterschied zwischen dem von dem ersten Drucksensor (8) gemessenen Ist-Druck an dem Auslass (6) und dem von dem zweiten Drucksensor (15, 16) an dem Förderabschnitt (7) gemessenen Ist-Druck ermittelt wird und
- **dass** ein optisches und/oder akustisches Warnsignal aktiviert wird und/oder die Leistung der Antriebseinheit (3) reduziert wird und/oder ein Antrieb (11) der Antriebseinheit (3) der Rotor-Stator-Einheit (5) der Exzenterschneckenpumpe (2) abgeschaltet wird, wenn der von dem zweiten Drucksensor (15, 16) gemessene Ist-Druck erheblich von dem von dem ersten Drucksensor (8) gemessenen Ist-Druck abweicht.

4. Verfahren nach wenigstens einem der vorhergehenden Ansprüche, **dadurch gekennzeichnet,**
- **dass** die Exzenterschneckenpumpe (2) entweder mit einer ersten Rotor-Stator-Einheit (5) zur Förderung von Farbe oder
- **dass** die Exzenterschneckenpumpe (2) mit einer zweiten Rotor-Stator-Einheit zur Förderung von Mörtel oder Putz betrieben wird und
- **dass** die Regeleinrichtung (4) abhängig von der in Betrieb befindlichen Rotor-Stator-Einheit (5)
- entweder mit einem ersten, auf die erste Rotor-Stator-Einheit (5) und Solldrücke von bis zu 180 bar angepassten Regelprogramm betrieben wird
- oder mit einem zweiten, auf die zweite Rotor-Stator-Einheit und Solldrücke von bis zu 60 bar angepassten Regelprogramm betrieben wird.

5. Verfahren nach wenigstens einem der vorhergehenden Ansprüche, **dadurch gekennzeichnet, dass** in Schaltstellungen, in welchen eine Betriebsart-Einstelleinrichtung (22) auf "Befüllen und Reinigen der Exzenterschneckenpumpe" gestellt ist, von der Regeleinrichtung (4) von dem wenigstens einen Drucksensor (8, 15, 16) erfasste Druckänderungen unbeachtet gelassen werden und die Antriebseinheit (3) in diesen Schaltstellungen der Betriebsart-Einstelleinrichtung (22) mit einer konstanten Drehzahl oder mit einem konstanten Drehmoment oder mit einer konstanten Leistung betrieben wird, welche allenfalls 50% einer Drehzahl oder eines Drehmoments oder einer Leistung beträgt, mit welcher die Antriebseinheit (3) in einem "Normalbetrieb" betrieben wird.

6. Verfahren nach wenigstens einem der vorhergehenden Ansprüche 1 bis 4, **dadurch gekennzeichnet, dass** in Schaltstellungen in welchen eine Betriebsart-Einstelleinrichtung (22) auf "Befüllen und Reinigen der Exzenterschneckenpumpe" steht, von der Regeleinrichtung (4) von dem wenigstens einen Drucksensor (1, 15, 16) erfasste Druckänderungen bis zu einem Grenzwert von insbesondere etwa 25 bar unbeachtet gelassen werden und die Antriebseinheit (3) in diesen Schaltstellungen der Betriebsart-Einstelleinrichtung (22) mit einer konstanten Drehzahl oder einer konstanten Leistung betrieben wird, welche allenfalls 50% einer Drehzahl bzw. Leistung beträgt, mit welcher die Antriebseinheit (3) in einem Normalbetrieb arbeitet und die Antriebseinheit (3) in diesen Schaltstellungen der Betriebsart-Einstelleinrichtung abgeschaltet wird, wenn an dem Drucksensor (8, 15, 16) oder an einem der Drucksensoren (8, 15, 16) der Grenzwert gemessen wird.

7. Verfahren nach wenigstens einem der vorhergehenden Ansprüche, **dadurch gekennzeichnet, dass** in einer Schaltstellung, in welcher eine Betriebsart-Einstelleinrichtung (22) auf "Rückwärtsfördern von Baumaterial" steht, von der Regeleinrichtung (4) von dem wenigstens einen Drucksensor (8, 15, 16) erfasste Druckänderungen unbeachtet gelassen werden und dass die Antriebseinheit (3) in dieser Schaltstellung der Betriebsart-Einstelleinrichtung (22) in umgekehrter Drehrichtung mit einer konstanten Drehzahl oder einem konstanten Drehmoment betrieben wird, welche bzw. welches gegenüber einem Normalbetrieb allenfalls 50% einer Drehzahl bzw. eines Drehmoments beträgt, mit welcher bzw. mit welchem der Antrieb in einem Normalbetrieb arbeitet.

8. Verfahren nach wenigstens einem der vorhergehenden Ansprüche 1 bis 6, **dadurch gekennzeichnet, dass** in einer Schaltstellung, in welcher eine Betriebsart-Einstelleinrichtung (22) auf "Rückwärtsfördern von Baumaterial" steht, von der Regeleinrichtung (4) von dem wenigstens einen Drucksensor (8, 15, 16) erfasste Druckänderungen bis zu einem Grenzwert von insbesondere etwa 25 bar unbeachtet gelassen werden und dass die Antriebseinheit in dieser Schaltstellung der Betriebsart-Einstelleinrichtung (22) in einer umgekehrten Drehrichtung bei einem unter dem Grenzwert liegenden Ist-Druck mit einer konstanten Drehzahl oder einem konstanten Drehmoment betrieben wird, welche bzw. welches allenfalls 50% einer Drehzahl beträgt, mit welcher die Antriebseinheit (3) in einem Normalbetrieb arbeitet und der Antrieb (11) in dieser Schaltstellung der Betriebsart-Einstelleinrichtung bei einem den Grenzwert erreichenden Ist-Druck abgeschaltet wird.

9. Verfahren nach wenigstens einem der vorhergehenden Ansprüche, **dadurch gekennzeichnet, dass** der von der Exzenterschneckenpumpe (2) zu erzeugende Solldruck mittels einer an der Fördervorrichtung (1) angeordneten, manuell betätigbaren Solldruck-Einstelleinrichtung (21) eingestellt wird oder dass der von der Exzenterschneckenpumpe (2) zu erzeugende Solldruck mittels einer auf einem elektronischen Gerät (24) ausführbaren Anwendung eingestellt wird, wobei eine Datenverkehr zwischen der Regeleinrichtung (4) und dem elektronischen Gerät (24) drahtlos durch eine direkte Verbindung oder drahtlos über ein Mobilfunknetzwerk ausgeführt wird.

10. Verfahren nach wenigstens einem der vorhergehenden Ansprüche, **dadurch gekennzeichnet, dass** die Fördervorrichtung (1) in einem Normalbetrieb derart betrieben wird, dass die Antriebseinheit (3) bei einem von dem ersten Drucksensoren (8) ermittelten, plötzlichen Abfall des Ist-Drucks auf insbesondere unter 5 bar abgeschaltet wird und/oder von der Regeleinrichtung (4) ein akustisches oder optisches Störungssignal aktiviert wird und/oder von der Regeleinrichtung (4) ein Störsignal an ein elektronisches Gerät (24) übermittelt wird, sofern der Abfall des Ist-Drucks festgestellt wird, ohne dass ein Leistungsabfall der Antriebseinheit (3) festgestellt wird.

11. Fördervorrichtung zur Durchführung eines Verfahrens nach einem der Ansprüche 1 bis 10, umfassend eine Exzenterschneckenpumpe (2) mit einer Rotor-Stator-Einheit (5) mit einem Auslass (6), eine Antriebseinheit (3), eine Regeleinrichtung (4) und einen Förderabschnitt (7), wobei die Fördervorrichtung (1) wenigstens zwei Drucksensoren (8, 15, 16) und eine Kenngrößen-Erfassungseinrichtung (9) umfasst.

12. Fördervorrichtung nach Anspruch 11, **dadurch gekennzeichnet, dass** die Kenngrößen-Erfassungseinrichtung (9) einen Drehzahlsensor (10) umfasst, mittels welchem eine Drehzahl der Förderschnecke (5a) der Exzenterschneckenpumpe (2) oder eines Antriebs (11) der Antriebseinheit (3) der Fördervorrichtung (1) erfassbar ist, und/oder dass die Kenngrößen-Erfassungseinrichtung (9) einen Drehmomentsensor umfasst, mittels welchem ein Drehmoment der Förderschnecke (5a) der Exzenterschneckenpumpe (2) oder eines Antriebs (11) der Antriebseinheit (3) der Fördervorrichtung (1) erfassbar ist, und/oder dass die Kenngrößen-Erfassungseinrichtung (9) einen Leistungssensor umfasst, mittels welchem eine Leistung der Förderschnecke (5a) der Exzenterschneckenpumpe (2) oder eines Antriebs (11) der Antriebseinheit (3) der Fördervorrichtung (1) erfassbar ist.

13. Exzenterschneckenpumpe nach Anspruch 11 oder 12, **dadurch gekennzeichnet, dass** der Drucksensor (8) im Bereich des Auslasses (6) der Rotor-Stator-Einheit (5) angeordnet ist und/oder dass der Drucksensor (15, 16) nach dem Auslass (6) der Rotor-Stator-Einheit (5) der Exzenterschneckenpumpe (2) in einem Bereich des Förderabschnitts (7) der Fördervorrichtung (1) angeordnet ist.

14. Fördervorrichtung nach einem der Ansprüche 11 bis 13, **dadurch gekennzeichnet, dass** die Fördervorrichtung (1) eine Solldruck-Einstelleinrichtung (21) zur manuellen Einstellung eines Solldrucks umfasst oder dass der von der Exzenterschneckenpumpe (2) zu erzeugende Solldruck mittels einer auf einem elektronischen Gerät (24) ausführbaren Anwendung einstellbar ist, wobei die Regeleinrichtung (4) und das elektronische Gerät (24) für einen Datenverkehr drahtlos durch eine direkte Verbindung oder drahtlos über ein Mobilfunknetzwerk verbunden sind.

## Claims

1. **Method for operating** a delivery apparatus (1) for delivering a flowable construction material (BM), such as, for example, paint or plaster or mortar, wherein the delivery apparatus (1) comprises a control device (4), an eccentric screw pump (2) having a rotor-stator unit (5) with an outlet (6), and a drive unit (3), wherein the actual pressure is measured by at least two pressure sensors (8, 15, 16), wherein the actual pressure is measured by the first pressure sensor (8) at the outlet, and wherein the actual pressure is measured by the second pressure sensor (15, 16) at the delivery section (7) arranged downstream of the outlet, wherein the delivery section (7) also comprises a discharging device (7b) out of which the flowable construction material (BM) is sprayed, comprising the steps
- that a target pressure which the eccentric screw pump (2) pumping the flowable construction material (BM) is intended to achieve at the outlet (6) or at a delivery section (7) arranged downstream of the outlet (6) is preset at a target-pressure setting device (21),
- that a characteristic variable, in particular a mechanical or electrical power and/or a rotational speed and/or a torque and/or a current of the drive unit (3) of the eccentric screw pump (2) is measured,
- that an actual pressure in a region of the outlet (6) of the rotor-stator unit (5) and/or in the delivery section (7) arranged downstream of the outlet (6) is measured by at least one pressure sensor (8, 15, 16),
- that a change in the actual pressure measured by the at least one pressure sensor (8, 15, 16) is related to at least one of the characteristic variables in such a manner
- that, in the event of a rise in the actual pressure above the target pressure, a reduction at least of one of the characteristic variables is brought about by the control device (4) in such a manner that the target pressure is achieved again, and
- that, in the event of a pressure drop in the actual pressure below the target pressure, an increase at least of one of the characteristic variables is brought about by the control device (4) in such a manner that the target pressure is achieved again.

2. Method according to Claim 1, **characterized in that**, during operation, the target pressure is achieved in such a manner that, in the control device (4), on the basis of a difference between the at least one measured actual pressure and the target pressure, an adapted characteristic variable value, in particular an adapted mechanical or electrical power value and/or an adapted rotational speed value and/or an adapted torque value and/or an adapted value of the current is determined by a PI controller (4a) and a power and/or a rotational speed and/or a torque of the drive (3) of the eccentric screw pump is set to said value or values.

3. Method according to Claim 1, **characterized**
- **in that** a pressure difference between the actual pressure measured by the first pressure sensor (8) at the outlet (6) and the actual pressure measured by the second pressure sensor (15, 16) at the delivery section (7) is determined by the control device (4), and
- **in that** an optical and/or acoustic warning signal is activated and/or the power of the drive unit (3) is reduced and/or a drive (11) of the drive unit (3) of the rotor-stator unit (5) of the eccentric screw pump (2) is switched off if the actual pressure measured by the second pressure sensor (15, 16) differs considerably from the actual pressure measured by the first pressure sensor (8).

4. Method according to at least one of the preceding claims, **characterized**
- **in that** the eccentric screw pump (2) is operated either with a first rotor-stator unit (5) for delivering paint, or
- **in that** the eccentric screw pump (2) is operated with a second rotor-stator unit for delivering mortar or plaster, and
- **in that** the control device (4), depending on the rotor-stator unit (5) in operation,
- is operated either by a first control program which is adapted to the first rotor-stator unit (5) and to target pressures of up to 180 bar,
- or is operated by a second control program which is adapted to the second rotor-stator unit and to target pressures of up to 60 bar.

5. Method according to at least one of the preceding claims, **characterized in that** in switching positions, in which an operating-mode setting device (22) is adjusted to "filling and cleaning the eccentric screw pump", pressure changes detected by the at least one pressure sensor (8, 15, 16) are ignored by the control device (4) and, in said switching positions of the operating-mode setting device (22), the drive unit (3) is operated at a constant rotational speed or at a constant torque or at a constant power which is at most 50% of a rotational speed or a torque or a power with which the drive unit (3) is operated in a "normal mode".

6. Method according to at least one of the preceding Claims 1 to 4, **characterized in that**, in switching positions, in which an operating-mode setting device (22) is on "filling and cleaning the eccentric screw pump", pressure changes detected by the at least one pressure sensor (1, 15, 16) up to a limit value of in particular approximately 25 bar are ignored by the control device (4) and, in said switching positions of the operating-mode setting device (22), the drive unit (3) is operated at a constant rotational speed or a constant power which is at most 50% of a rotational speed or power with which the drive unit (3) operates in a normal mode and, in said switching positions of the operating-mode setting device, the drive unit (3) is switched off if the limit value is measured at the pressure sensor (8, 15, 16) or at one of the pressure sensors (8, 15, 16).

7. Method according to at least one of the preceding claims, **characterized in that** in a switching position, in which an operating-mode setting device (22) is on "rearward delivering of construction material", pressure changes detected by the at least one pressure sensor (8, 15, 16) are ignored by the control device (4), and **in that**, in said switching position of the operating-mode setting device (22), the drive unit (3) is operated in a reverse direction of rotation at a constant rotational speed or a constant torque which, in comparison to a normal mode, is at most 50% of a rotational speed or a torque with which the drive operates in a normal mode.

8. Method according to at least one of the preceding Claims 1 to 6, **characterized in that** in a switching position, in which an operating-mode setting device (22) is on "rearward delivering of construction material", pressure changes detected by the at least one pressure sensor (8, 15, 16) up to a limit value of in particular approximately 25 bar are ignored by the control device (4), and **in that**, in said switching position of the operating-mode setting device (22), the drive unit, with an actual pressure lying below the limit value, is operated in a reverse direction of rotation at a constant rotational speed or a constant torque which is at most 50% of a rotational speed with which the drive unit (3) operates in a normal mode, and, in said switching position of the operating-mode setting device, the drive (11) is switched off when an actual pressure reaches the limit value.

9. Method according to at least one of the preceding claims, **characterized in that** the target pressure to be produced by the eccentric screw pump (2) is set by means of a manually actuable target-pressure setting device (21) arranged on the delivery apparatus (1) or in that the target pressure to be produced by the eccentric screw pump (2) is set by means of an application which can be executed on an electronic device (24), wherein data traffic between the control device (4) and the electronic device (24) is carried out wirelessly by means of a direct connection or wirelessly via a mobile radio network.

10. Method according to at least one of the preceding claims, **characterized in that** the delivery apparatus (1) is operated in a normal mode in such a manner that, in the event of a sudden drop in the actual pressure to in particular below 5 bar, the sudden drop being determined by the first pressure sensors (8), the drive unit (3) is switched off and/or an acoustic or optical interfering signal is activated by the control device (4) and/or an interfering signal is transmitted by the control device (4) to an electronic device (24) if the drop in the actual pressure is established without a power drop of the drive unit (3) being established.

11. Delivery apparatus for carrying out a method according to one of Claims 1 to 10, comprising an eccentric screw pump (2) having a rotor-stator unit (5) with an outlet (6), a drive unit (3), a control device (4) and a delivery section (7), wherein the delivery apparatus (1) comprises at least two pressure sensors (8, 15, 16) and a characteristic-variable detection device (9).

12. Delivery apparatus according to Claim 11, **characterized in that** the characteristic-variable detection device (9) comprises a rotational speed sensor (10) by means of which a rotational speed of the delivery screw (5a) of the eccentric screw pump (2) or of a drive (11) of the drive unit (3) of the delivery apparatus (1) can be detected, and/or **in that** the characteristic-variable detection device (9) comprises a torque sensor by means of which a torque of the delivery screw (5a) of the eccentric screw pump (2) or of a drive (11) of the drive unit (3) of the delivery apparatus (1) can be detected, and/or **in that** the characteristic-variable detection device (9) comprises a power sensor by means of which a power of the delivery screw (5a) of the eccentric screw pump (2) or of a drive (11) of the drive unit (3) of the delivery apparatus (1) can be detected.

13. Eccentric screw pump according to Claim 11 or 12, **characterized in that** the pressure sensor (8) is arranged in the region of the outlet (6) of the rotor-stator unit (5), and/or **in that** the pressure sensor (15, 16) is arranged downstream of the outlet (6) of the rotor-stator unit (5) of the eccentric screw pump (2) in a region of the delivery section (7) of the delivery apparatus (1).

14. Delivery apparatus according to one of Claims 11 to 13, **characterized in that** the delivery apparatus (1) comprises a target-pressure setting device (21) for manually setting a target pressure, or **in that** the target pressure to be produced by the eccentric screw pump (2) can be set by means of an application which can be executed on an electronic device (24), wherein the control device (4) and the electronic device (24) are connected, for data traffic, wirelessly by means of a direct connection or wirelessly via a mobile radio network.

## Revendications

1. Procédé permettant de faire fonctionner un dispositif de transport (1) destiné à transporter un matériau de construction coulant (BM), comme par exemple de la peinture ou de l'enduit ou du mortier, le dispositif de transport (1) comprenant un équipement de régulation (4), une pompe à vis sans fin excentrique (2) dotée d'une unité rotor/stator (5) ayant une sortie (6) et une unité d'entraînement (3), la pression réelle étant mesurée par au moins deux capteurs de pression (8, 15, 16), la pression réelle étant mesurée par le premier capteur de pression (8) à la sortie, et la pression réelle étant mesurée par le deuxième capteur de pression (15, 16) au niveau de la partie de transport (7) en aval de la sortie, la partie de transport (7) comprenant également un dispositif de distribution (7b) à partir duquel le matériau de construction coulant (BM) est projeté, comprenant les étapes suivantes
- préréglage sur un équipement de réglage de pression théorique d'une pression théorique (21) que la pompe à vis sans fin excentrique (2) pompant le matériau de construction coulant (BM) doit atteindre à la sortie (6) ou au niveau d'une partie de transport (7) en aval de la sortie (6),
- mesure d'une grandeur caractéristique, en particulier d'une puissance mécanique ou électrique et/ou d'une vitesse de rotation et/ou d'un couple et/ou d'une intensité de courant de l'unité d'entraînement (3) de la pompe à vis sans fin excentrique (2),
- mesure par au moins un capteur de pression (8, 15, 16) d'une pression réelle dans une zone de la sortie (6) de l'unité rotor/stator (5) et/ou dans la partie de transport (7) en aval de la sortie (6),
- mise en relation d'une variation de la pression réelle mesurée par ledit au moins un capteur de pression (8, 15, 16) avec au moins l'une des grandeurs caractéristiques de telle sorte,
- qu'en cas d'augmentation de la pression réelle au-dessus de la pression théorique, l'équipement de régulation (4) provoque une réduction d'au moins l'une des grandeurs caractéristiques de telle sorte que la pression théorique soit à nouveau atteinte, et
- qu'en cas de chute de pression de la pression réelle au-dessous de la pression théorique, l'équipement de régulation (4) provoque une augmentation d'au moins l'une des grandeurs caractéristiques de telle sorte que la pression théorique soit à nouveau atteinte.

2. Procédé selon la revendication 1, **caractérisé en ce qu'**en cours de fonctionnement, la pression théorique est atteinte de telle sorte que dans l'équipement de régulation (4), sur la base d'une différence entre ladite au moins une pression réelle mesurée et la pression théorique, un régulateur PI (4a) détermine une valeur de grandeur caractéristique adaptée, en particulier une valeur de puissance mécanique ou électrique adaptée et/ou une valeur de vitesse de rotation adaptée et/ou une valeur de couple adaptée et/ou une valeur adaptée de l'intensité de courant, et une puissance et/ou une vitesse de rotation et/ou un couple du dispositif d'entraînement (3) de la pompe à vis sans fin excentrique sont réglés sur celles-ci.

3. Procédé selon la revendication 1, **caractérisé en ce que**
- l'équipement de régulation (4) détermine une différence de pression entre la pression réelle mesurée par le premier capteur de pression (8) à la sortie (6) et la pression réelle mesurée par le deuxième capteur de pression (15, 16) au niveau de la partie de transport (7), et
- un signal d'alarme optique et/ou acoustique est activé et/ou la puissance de l'unité d'entraînement (3) est réduite et/ou un dispositif d'entraînement (11) de l'unité d'entraînement (3) de l'unité rotor/stator (5) de la pompe à vis sans fin excentrique (2) est désactivé si la pression réelle mesurée par le deuxième capteur de pression (15, 16) s'écarte considérablement de la pression réelle mesurée par le premier capteur de pression (8).

4. Procédé selon au moins l'une des revendications précédentes, **caractérisé en ce que**
- soit la pompe à vis sans fin excentrique (2) est actionnée par une première unité rotor/stator (5) pour transporter de la peinture,
- soit la pompe à vis sans fin excentrique (2) est actionnée par une deuxième unité rotor/stator pour transporter du mortier ou de l'enduit, et
- l'équipement de régulation (4) est actionné en fonction de l'unité rotor/stator (5) en cours de fonctionnement,
- soit avec un premier programme de régulation adapté à la première unité rotor/stator (5) et des pressions théoriques jusqu'à 180 bar,
- soit avec un deuxième programme de régulation adapté à la deuxième unité rotor/stator et des pressions théoriques jusqu'à 60 bar.

5. Procédé selon au moins l'une des revendications précédentes, **caractérisé en ce que** dans des positions de commutation dans lesquelles un équipement de réglage de mode de fonctionnement (22) est réglé sur « remplissage et nettoyage de la pompe à vis sans fin excentrique », l'équipement de régulation (4) ignore des variations de pression détectées par ledit au moins un capteur de pression (8, 15, 16), et l'unité d'entraînement (3) fonctionne dans ces positions de commutation de l'équipement de réglage de mode de fonctionnement (22) à une vitesse de rotation constante ou à un couple constant ou à une puissance constante qui sont au mieux égaux à 50 % d'une vitesse de rotation ou d'un couple ou d'une puissance avec lesquels l'unité d'entraînement (3) fonctionne en « fonctionnement normal ».

6. Procédé selon au moins l'une des revendications précédentes 1 à 4, **caractérisé en ce que** dans des positions de commutation dans lesquelles un équipement de réglage de mode de fonctionnement (22) est réglé sur « remplissage et nettoyage de la pompe à vis sans fin excentrique », l'équipement de régulation (4) ignore des variations de pression détectées par ledit au moins un capteur de pression (1, 15, 16) jusqu'à une valeur limite en particulier d'environ 25 bar, et l'unité d'entraînement (3) fonctionne dans ces positions de commutation de l'équipement de réglage de mode de fonctionnement (22) à une vitesse de rotation constante ou à une puissance constante qui sont au mieux égales à 50 % d'une vitesse de rotation ou d'une puissance avec lesquelles l'unité d'entraînement (3) fonctionne en fonctionnement normal, et l'unité d'entraînement (3) est désactivée dans ces positions de commutation de l'équipement de réglage de mode de fonctionnement si la valeur limite est mesurée au niveau du capteur de pression (8, 15, 16) ou d'un des capteurs de pression (8, 15, 16).

7. Procédé selon au moins l'une des revendications précédentes, **caractérisé en ce que** dans une position de commutation dans laquelle un équipement de réglage de mode de fonctionnement (22) est réglé sur « transport de matériau de construction en marche arrière », l'équipement de régulation (4) ignore des variations de pression détectées par ledit au moins un capteur de pression (8, 15, 16), et **en ce que** l'unité d'entraînement (3) fonctionne dans cette position de commutation de l'équipement de réglage de mode de fonctionnement (22) dans un sens de rotation inversé à une vitesse de rotation constante ou à un couple constant qui est égal(e) au mieux par rapport à un fonctionnement normal à 50 % d'une vitesse de rotation ou d'un couple avec laquelle/lequel le dispositif d'entraînement fonctionne en fonctionnement normal.

8. Procédé selon au moins l'une des revendications précédentes 1 à 6, **caractérisé en ce que** dans une position de commutation dans laquelle un équipement de réglage de mode de fonctionnement (22) est réglé sur « transport de matériau de construction en marche arrière », l'équipement de régulation (4) ignore des variations de pression détectées par ledit au moins un capteur de pression (8, 15, 16) jusqu'à une valeur limite en particulier d'environ 25 bar, et **en ce que** l'unité d'entraînement dans cette position de commutation de l'équipement de réglage de mode de fonctionnement (22) fonctionne dans un sens de rotation inversé pour une pression réelle inférieure à la valeur limite à une vitesse de rotation constante ou à un couple constant qui est égal (e) au mieux à 50 % d'une vitesse de rotation à laquelle l'unité d'entraînement (3) fonctionne en fonctionnement normal, et le dispositif d'entraînement (11) dans cette position de commutation de l'équipement de réglage de mode de fonctionnement est désactivé pour une pression réelle atteignant la valeur limite.

9. Procédé selon au moins l'une des revendications précédentes, **caractérisé en ce que** la pression théorique à produire par la pompe à vis sans fin excentrique (2) est réglée au moyen d'un équipement de réglage de pression théorique (21) disposé au niveau du dispositif de transport (1) et pouvant être actionné manuellement, ou **en ce que** la pression théorique à produire par la pompe à vis sans fin excentrique (2) est réglée au moyen d'une application pouvant être exécutée sur un appareil électronique (24), un trafic de données entre l'équipement de régulation (4) et l'appareil électronique (24) étant effectué sans fil par une liaison directe ou sans fil par un réseau radio mobile.

10. Procédé selon au moins l'une des revendications précédentes, **caractérisé en ce que** le dispositif de transport (1) fonctionne en fonctionnement normal de telle sorte que l'unité d'entraînement (3) est désactivée en cas de chute soudaine de la pression réelle, déterminée par l'un des premiers capteurs de pression (8), en particulier à moins de 5 bar, et/ou l'équipement de régulation (4) active un signal de dérangement acoustique ou optique, et/ou l'équipement de régulation (4) transmet un signal de dérangement à un appareil électronique (24) dans la mesure où la chute de la pression réelle est constatée sans qu'aucune chute de puissance de l'unité d'entraînement (3) ne soit constatée.

11. Dispositif de transport permettant d'exécuter un procédé selon l'une quelconque des revendications 1 à 10, comprenant une pompe à vis sans fin excentrique (2) dotée d'une unité rotor/stator (5) ayant une sortie (6), une unité d'entraînement (3), un équipement de régulation (4) et une partie de transport (7), le dispositif de transport (1) comprenant au moins deux capteurs de pression (8, 15, 16) et un équipement de détection de grandeurs caractéristiques (9).

12. Dispositif de transport selon la revendication 11, **caractérisé en ce que** l'équipement de détection de grandeurs caractéristiques (9) comprend un capteur de vitesse de rotation (10) au moyen duquel une vitesse de rotation de la vis sans fin de transport (5a) de la pompe à vis sans fin excentrique (2) ou d'un dispositif d'entraînement (11) de l'unité d'entraînement (3) du dispositif de transport (1) peut être détectée, et/ou en ce que l'équipement de détection de grandeurs caractéristiques (9) comprend un capteur de couple au moyen duquel un couple de la vis sans fin de transport (5a) de la pompe à vis sans fin excentrique (2) ou d'un dispositif d'entraînement (11) de l'unité d'entraînement (3) du dispositif de transport (1) peut être détecté, et/ou **en ce que** l'équipement de détection de grandeurs caractéristiques (9) comprend un capteur de puissance au moyen duquel une puissance de la vis sans fin de transport (5a) de la pompe à vis sans fin excentrique (2) ou d'un dispositif d'entraînement (11) de l'unité d'entraînement (3) du dispositif de transport (1) peut être détectée.

13. Pompe à vis sans fin excentrique selon la revendication 11 ou 12, **caractérisée en ce que** le capteur de pression (8) est disposé au niveau de la sortie (6) de l'unité rotor/stator (5), et/ou **en ce que** le capteur de pression (15, 16) est disposé après la sortie (6) de l'unité rotor/stator (5) de la pompe à vis sans fin excentrique (2) dans une zone de la partie de transport (7) du dispositif de transport (1).

14. Dispositif de transport selon l'une quelconque des revendications 11 à 13, **caractérisé en ce que** le dispositif de transport (1) comprend un équipement de réglage de pression théorique (21) destiné au réglage manuel d'une pression théorique, ou **en ce que** la pression théorique à produire par la pompe à vis sans fin excentrique (2) peut être réglée au moyen d'une application pouvant être exécutée sur un appareil électronique (24), l'équipement de régulation (4) et l'appareil électronique (24) étant reliés pour un trafic de données sans fil par une liaison directe ou sans fil par un réseau radio mobile.
